(19) Europäisches Patentamt
European Patent Office
Office européen des brevets

(11) **EP 3 173 977 A1**

(12) **EUROPEAN PATENT APPLICATION**

(43) Date of publication:
**31.05.2017 Bulletin 2017/22**

(51) Int Cl.:
***G06K 9/46*** *(2006.01)* ***G06K 9/62*** *(2006.01)*

(21) Application number: **16199669.9**

(22) Date of filing: **18.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.11.2015 CN 201510829071**

(71) Applicant: **Xiaomi Inc.**
**Beijing 100085 (CN)**

(72) Inventors:
• **LONG, Fei**
**BEIJING, 100085 (CN)**
• **CHEN, Zhijun**
**BEIJING, 100085 (CN)**
• **ZHANG, Tao**
**BEIJING, 100085 (CN)**

(74) Representative: **Cougard, Jean-Marie et al**
**Cabinet Beau de Loménie**
**158, rue de l'Université**
**75340 Paris Cedex 07 (FR)**

(54) **METHOD AND DEVICE FOR FEATURE EXTRACTION**

(57)  Method and device for feature extraction are provided in the disclosure. The method may include: partitioning (102) an image into a plurality of blocks, wherein each of the blocks includes a plurality of cells; performing (104) a sparse signal decomposition on each of the cells using a predetermined dictionary D to obtain a sparse vector corresponding to each of the cells respectively; and extracting (106) a HOG feature of the image according to the sparse vectors. The following fact may be solved that the process of the extraction of the HOG feature is directly calculated with respect to the space domain of the image, which causes that detection rate and accuracy are relatively low in pattern recognition; the effect may be reached that the detection rate and accuracy are improved in pattern recognition by extracting the HOG feature of the image in the frequency domain.

partitioning an image into a plurality of blocks, wherein each of the blocks includes a plurality of cells — 102

performing a sparse signal decomposition to each of the cells to obtain a sparse vector corresponding to each of the cells respectively — 104

extracting the HOG features of the image according to the sparse vectors — 106

**FIG. 1**

**Description**

**FIELD**

The present disclosure generally relates to the technical field of image processing, and more particularly to a method and a device for feature extraction.

**BACKGROUND**

The image detection and recognition is an important research field in computer vision. The most common way in the image detection and recognition technology is to extract some feature of an image to detect and recognize the image.

In the related art, an image is detected and recognized by extracting a Histogram of Oriented Gradient (HOG) feature of the image. The method for extracting the HOG feature is as follows: calculating the gradient of each of the pixels in an image; partitioning the image into a plurality of cells, wherein each of the cells includes a plurality of pixels, wherein every n adjacent cells compose a block; performing statistics on the gradient histogram of all pixels in each of the cells, and obtaining the HOG feature of each of the blocks according to the gradient histogram of all the cells in each of the blocks; and performing statistics on the HOG feature of the image to obtain the HOG feature of the image.

**SUMMARY**

In view of the fact in related arts, a method and device for feature extraction are provided in the disclosure. The technical solutions are as follows:

According to a first aspect of the present disclosure, a method for feature extraction is provided, including: partitioning an image into a plurality of blocks, wherein each of the blocks includes a plurality of cells; performing a sparse signal decomposition on each of the cells using a predetermined dictionary D to obtain a sparse vector corresponding to each of the cells respectively, wherein the predetermined dictionary D is a dictionary calculated by applying an iterative algorithm to a sample image; and extracting a Histogram of Oriented Gradient (HOG) feature of the image according to the sparse vectors.

In a particular embodiment, the method may further include: obtaining the sample image, wherein the sample image includes a plurality of categories of image sets; iterating to obtain an optimum dictionary as the predetermined dictionary D, using the following formula:

$$\min(R, D) \; \left\| Y - DR \right\|_F^2 \; \text{ subject to } \; \forall i, \left\| m_i \right\|_0 \le T_0$$

wherein, $R = [r_1, r_2, ..., r_c]$ denotes a sparse coefficient matrix of C sample images, Y denotes all categories of the sample images, $\left\| \bullet \right\|_0$ denotes calculating a number of non-zero elements in a vector, $T_0$ denotes a predefined sparse upper limit, and $\left\| \bullet \right\|_F$ denotes calculating a quadratic sum of each element of a vector, and then squaring the quadratic sum.

In a particular embodiment, the method may further include: performing a sparse signal decomposition on each of the cells using a predetermined dictionary D to obtain a sparse vector corresponding to each of the cells respectively includes: adjusting pixels in each of the cells to an n*1-dimensional vector; and performing, under the predetermined dictionary D, the sparse signal decomposition on the vector in each of the cells to obtain the corresponding sparse vector, using the following formula:

$$\min(x) \; \left\| x \right\|_1 \; \text{ subject to } \; y = Dx$$

wherein, y denotes the vector in each of the cells, x denotes a sparse vector obtained by sparse processing y under the predetermined dictionary D, $\left\| x \right\|_1$ denotes a sum of absolute value of each column of the sparse vector x, wherein each of the sparse vectors is an m*1-dimensional vector, and the predetermined dictionary D is an n*m matrix.

In a particular embodiment, the extracting the Histogram of Oriented Gradient (HOG) feature of the image according to the sparse vectors may include: calculating, according to the sparse vector, a gradient magnitude and gradient direction of each of the cells to obtain a descriptor of each of the cells; performing statistics on respective descriptors in each of the blocks to obtain the HOG feature of each of the blocks; and performing statistics on the HOG feature of each of the blocks in the image to obtain the HOG feature of the image.

In a particular embodiment, the performing statistics on the HOG feature of each of the blocks in the image to obtain the HOG feature of the image may include: cascading the HOG feature of each of the blocks in the image into a matrix, to obtain the HOG feature of the image, wherein each column of the matrix is a HOG feature of one of the blocks.

In a particular embodiment, performing statistics on the HOG feature of each of the blocks in the image to obtain the HOG feature of the image may include: adjusting the HOG feature of each of the blocks in the image from an initial L*1-dimensional vector to a M*N matrix, wherein each of the blocks includes M*N pixels, and L=M*N; and obtaining the HOG feature of the image according to the adjusted HOG feature of each of the blocks and a corresponding position of each of the blocks in the image.

In a particular embodiment, the method may further include: normalizing the image to obtain an image of a predetermined size.

In one particular embodiment, the steps of the method for feature extraction are determined by computer program instructions.

Consequently, according to a fourth aspect, the invention is also directed to a computer program for executing the steps of a method for feature extraction as defined above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a second aspect of the present disclosure, a device for feature extraction is provided, including: a partition module, configured to partition an image into a plurality of blocks, wherein each of the blocks includes a plurality of cells; a decomposition module, configured to perform a sparse signal decomposition on each of the cells using a predetermined dictionary D, to obtain a sparse vector corresponding to each of the cells respectively, wherein the predetermined dictionary D is a dictionary calculated by applying an iterative algorithm to a sample image; and an extraction module, configured to extract a Histogram of Oriented Gradient (HOG) feature of the image according to the sparse vectors.

In a particular embodiment, the device may further include: obtaining module, configured to obtain a sample image, wherein the sample image includes a plurality of categories of image sets; and an iteration module, configured to iterate to obtain an optimum dictionary as the predetermined dictionary D, using the following formula:

$$\min(R, D) \ \left\| Y - DR \right\|_F^2 \ \text{ subject to } \ \forall i, \left\| m_i \right\|_0 \le T_0$$

wherein, R= [$r_1$, $r_2$,...,$r_c$] denotes a sparse coefficient matrix of C sample images, Y denotes all categories of the sample images, $\left\| \bullet \right\|_0$ denotes calculating a number of non-zero elements in a vector, $T_0$ denotes a predefined sparse upper limit, and $\left\| \bullet \right\|_F$ denotes calculating a quadratic sum of each element of a vector, and then squaring the quadratic sum. In a particular embodiment, the decomposition module may include: a first adjustment sub-module, configured to adjust pixels in each of the cells to an n*1-dimensional vector; and a signal decomposition sub-module, configured to perform, under the predetermined dictionary D, the sparse signal decomposition on the vector in each of the cells, to obtain the corresponding sparse vector, using the following formula:

$$\min(x) \ \left\| x \right\|_1 \ \text{ subject to } \ y = Dx$$

wherein, y denotes the vector in each of the cells, x denotes a sparse vector obtained by sparse processing y under the predetermined dictionary D, $\left\| x \right\|_1$ denotes a sum of absolute value of each column of the sparse vector x, wherein each of the sparse vectors is an m*1-dimensional vector, and the predetermined dictionary D is an n*m matrix.

In a particular embodiment, the extraction module may include: a calculation sub-module, configured to calculate, according to the sparse vector, a respective gradient magnitude and gradient direction of each of the cells, to obtain a descriptor of each of the cells; a first statistics sub-module, configured to perform statistics on a respective descriptor in each of the blocks to obtain the HOG feature of each of the blocks; and a second statistics sub-module, configured to perform statistics on the HOG feature of each of the blocks in the image to obtain the HOG feature of the image.

In an alternative embodiment, the second statistics sub-module may be configured to cascade the HOG feature of each of the blocks in the image into a matrix, to obtain the HOG feature of the image, wherein each column of the matrix is a HOG feature of one of the blocks.

In a particular embodiment, the second statistics sub-module may include: a second adjustment sub-module, configured to adjust the HOG feature of each of the blocks in the image from an initial L*1-dimensional vector to an M*N matrix, wherein each of the blocks includes M*N pixels, and L=M*N; and a feature extraction sub-module, configured to obtain the HOG feature of the image according to the adjusted HOG feature of each of the blocks and a corresponding position of each of the blocks in the image.

In a particular embodiment, the device may further include: a processing module, configured to normalize the image to obtain an image of a predetermined size.

According to a third aspect of the present disclosure, a device for feature extraction is provided, including: a processor, and a memory for storing instructions executable by the processor; wherein the processor is configured to partition an image into a plurality of blocks, wherein each of the blocks includes a plurality of cells; perform a sparse signal decomposition on each of the cells using a predetermined dictionary D, to obtain a sparse vector corresponding to each of the cells respectively, wherein the predetermined dictionary D is a dictionary calculated by applying an iterative algorithm to a sample image; and extract a Histogram of Oriented Gradient (HOG) feature of the image according to the sparse vectors.

Embodiments of the disclosure may provide at least some of the following beneficial effects:

By partitioning an image into a plurality of blocks, wherein each of the blocks includes a plurality of cells; performing a sparse signal decomposition on each of the cells using a predetermined dictionary D, to obtain a sparse vector corresponding to each of the cells respectively, wherein the predetermined dictionary D is a dictionary calculated by applying an iterative algorithm to a sample image; and extracting a Histogram of Oriented Gradient (HOG) feature of the image according to the sparse vectors, the following fact may be solved that the process of the extraction of the HOG feature is directly calculated with respect to the space domain of the image, which causes the detection rate and accuracy are relatively low in pattern recognition. The effect may be reached that the detection rate and accuracy are improved in pattern recognition by extracting the HOG feature of the image in the frequency domain.

It is to be understood that both the forgoing general description and the following detailed description are exemplary only, and are not restrictive of the present disclosure.

## BRIEF DESCRIPTION OF THE DRAWINGS

The accompanying drawings, which are incorporated in and constitute a part of this specification, illustrate embodiments consistent with the invention and, together with the description, serve to explain the principles of the invention.

FIG. 1 is a flow chart showing a method for feature extraction according to an exemplary embodiment.
FIG. 2A is a flow chart showing a method for feature extraction according to another exemplary embodiment.
FIG. 2B is a schematic diagram showing the image partition according to an exemplary embodiment.
FIG. 2C is a schematic diagram showing the image partition according to another exemplary embodiment.
FIG. 2D is a schematic diagram showing adjusting pixels of a cell according to an exemplary embodiment.
FIG. 2E is a schematic diagram showing the statistics of the HOG feature in a block according to an exemplary embodiment.
FIG. 3A is a flow chart showing a method for feature extraction according to an exemplary embodiment.
FIG. 3B is a flow chart showing the statistics of the HOG feature of an image according to an exemplary embodiment.
FIG. 4 is a block diagram showing a device for feature extraction according to an exemplary embodiment.
FIG. 5 is a block diagram showing a device for feature extraction according to another exemplary embodiment.
FIG. 6 is a block diagram showing sub-modules of a device for feature extraction according to an exemplary embodiment.
FIG. 7 is a block diagram showing a device for feature extraction according to another exemplary embodiment.

## DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of device and methods consistent with aspects related to the invention as recited in the appended claims.

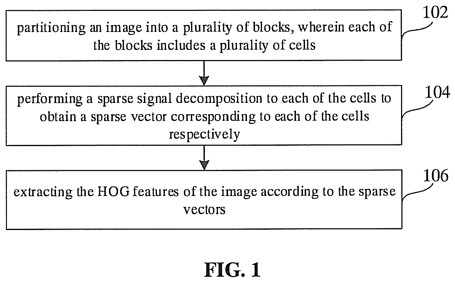

FIG. 1 is a flow chart showing a method for feature extraction according to an exemplary embodiment. As shown in FIG. 1, the embodiment takes the method which is applied in hardware (such as a device or a terminal) for pattern recognition as an example, and the method may include the following steps.

In step 102, an image is partitioned into a plurality of blocks, wherein each of the blocks includes a plurality of cells.

In step 104, the sparse signal decomposition is performed on each of the cells using a predetermined dictionary D to obtain a sparse vector corresponding to each of the cells respectively.

The predetermined dictionary D is a dictionary calculated by applying an iterative algorithm to a sample image.

The sparse signal decomposition refers to converting a given observed signal into a sparse vector according to a predetermined dictionary D, wherein a plurality of elements in the sparse vector is zero.

In the embodiment, the pixels in each of the cells is taken as a given observed signal, which is converted into a corresponding sparse vector according to a predetermined dictionary D, and then the sparse vector corresponding to each of the cells is obtained respectively.

In step 106, the HOG feature of the image is extracted according to the sparse vector.

The HOG feature of the image is extracted according to the sparse vector obtained from the sparse signal decomposition.

To sum up, by partitioning an image into a plurality of blocks, wherein each of the blocks includes a plurality of cells; performing a sparse signal decomposition on each of the cells using a predetermined dictionary D to obtain a sparse vector corresponding to each of the cells respectively, wherein the predetermined dictionary D is a dictionary calculated by applying an iterative algorithm to a sample image; and extracting a Histogram of Oriented Gradient (HOG) feature of the image according to the sparse vectors, the method for feature extraction provided in the present embodiment of the disclosure may solve the following fact that the detection rate and accuracy are relatively low in pattern recognition due to the fact that the process for extracting the HOG feature is directly calculated with respect to the spatial domain of the image. The method may achieve the intended effect of improving the detection rate and accuracy in pattern recognition by extracting the HOG feature of the image in the frequency domain.

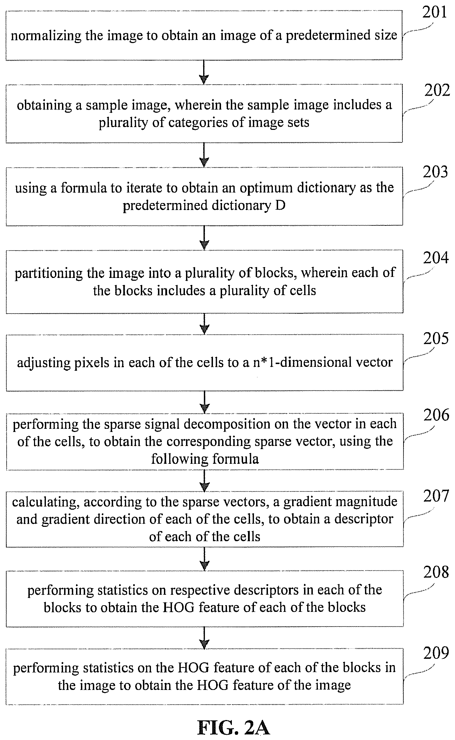

FIG. 2A is a flow chart showing a method for feature extraction according to another exemplary embodiment. As shown in FIG. 2A, the embodiment takes the method which is applied in hardware (such as a device or terminal) for pattern recognition as an example, and the method may include the following steps.

In step 201, the image is normalized to obtain an image of a predetermined size.

Pattern recognition generally involves the feature extraction for a plurality of images. Before performing the feature extraction to an image, a terminal may perform normalization processing on images to transform images of different sizes into those of a predetermined size in order to perform a unified processing on the sample images.

In step 202, a sample image is obtained, wherein the sample image includes a plurality of categories of image sets.

The terminal may obtain the sample image through a sample image library, wherein the sample image includes a plurality of categories of image sets, such as face recognition, body recognition or vehicle recognition, and will not be elaborated herein.

Alternatively, after obtaining the sample image, the terminal may perform normalization processing on the sample image to transform sample images of different sizes into those of a predetermined size in order to perform a unified processing on the sample images.

In step 203, the optimum dictionary which is take as the predetermined dictionary D may be obtained by iteratively using the following formula:

$$\min(R, D) \; \|Y - DR\|_F^2 \;\; \text{subject to} \;\; \forall i, \|m_i\|_0 \le T_0$$

wherein, R= [$r_1$, $r_2$,..., $r_c$] denotes a sparse coefficient matrix of C sample images, Y denotes all categories of the sample images, $\|\bullet\|_0$ denotes calculating a number of non-zero elements in a vector, $T_0$ denotes a predefined sparse upper limit, and $\|\bullet\|_F$ denotes calculating a quadratic sum of each element of a vector, and then squaring the quadratic sum. The above formula is, namely K-SVD (K-means Singular Value Decomposition) algorithm.

K-SVD algorithm may implement the dictionary learning in sample images through iterative process, which uses sparse representation coefficients to update the atoms in the dictionary. Through continuous iteration, a set of atoms in the dictionary, which may reflect image feature, are obtained finally, namely predetermined dictionary D, wherein the atoms is referred to the elements in the dictionary. That is, the final predetermined dictionary D is an optimum dictionary obtained by sample images learning.

The iterative process of K-SVD algorithms is as follows: assuming that there are X categories sample images, Ni sample images are provided for the i-th category. All the sample images of i-th category are represented by the matrix $Y_i = [y_{i1},...,y_{iN_i}]$ and the sample images of all categories are represented by $Y_i = [Y_1,...,Y_x]$. Using the formulas above to learn in the sample images, an optimum predetermined dictionary D will be obtained finally.

In step 204, the image is partitioned into a plurality of blocks, wherein each of the blocks includes a plurality of cells.

In a particular example, the partition of the normalized image by the terminal may include: partitioning the image into a plurality of blocks, then partitioning each of the blocks into a plurality of cells.

In a particular example, the partition of the normalized image by the terminal may include: partitioning the image into a plurality of cells, and then combining adjacent cells into a block, wherein each of the blocks include a plurality of cells. For example, a block may compose of four adjacent pairwise cells which is arranged in a shape of Chinese feature "田 ".

In the present exemplary embodiment, during the process of image partition, the partitioning into blocks may be performed before the partitioning into cells, and vice versa. The implementation order is without any specific limit.

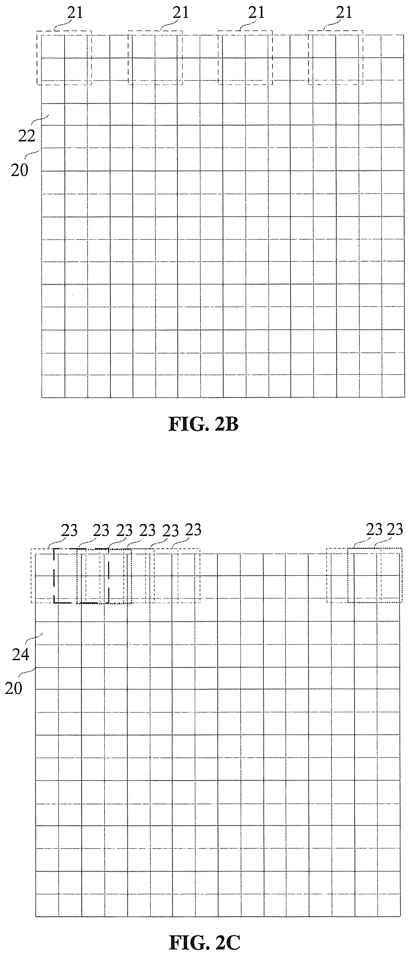

For example, an image 20 of 128 pixels * 128 pixels may be firstly partitioned into non-overlapping blocks 21 of 16 pixels * 16 pixels, and then each of the blocks 21 of 16 pixels * 16 pixels is partitioned into cells 22 of 8 pixels * 8 pixels, so that the image may include 8 * 8=64 non-overlapping blocks 21, and each of the blocks may include 2 * 2=4 cells, as shown in FIG. 2B.

For example, an image 20 of 128 pixels * 128 pixels is partitioned into overlapping blocks 23 of 16 pixels * 16 pixels firstly, and then each of the blocks 23 of 16 pixels * 16 pixels is partitioned into cells 24 of 8 pixels * 8 pixels, so that the image may include 16 * 16=256 overlapping blocks 23, and each of the blocks may include 2 * 2=4 cells, as shown in FIG. 2C.

In step 205, the pixels in each of the cells is adjusted to an n*1-dimensional vector.

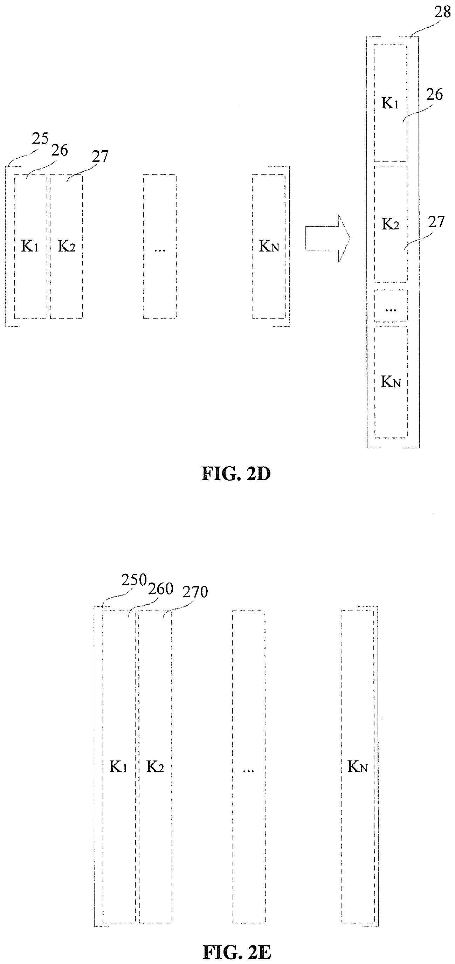

After the image is partitioned, the pixels in each of the cells may be considered as a matrix, and the matrix corresponding to the pixels in each of the cells may be adjusted to an n*1-dimensional vector. In the process of adjusting the matrix, the second column $K_2$27 in the matrix 25 corresponding to the pixels is cascaded to be under the first column $K_1$26, and the third column (not shown in the FIG) in the matrix 25 corresponding to the pixels is cascaded to be under the second column $K_2$27, and so on. Thereby, the matrix 25 corresponding to the pixels in each of the cells is adjusted to an n*1-dimensional vector 28, as shown in FIG. 2D.

In step 206, the vectors in each of the cells are subject to the sparse signal decomposition to obtain the corresponding sparse vectors, using the following formula:

$$\min(x) \ \|x\|_1 \ \text{subject to} \ \ y = Dx \, .$$

wherein, y denotes the vectors in each of the cells, x is the sparse vectors obtained by performing sparse decomposition on y under the predetermined dictionary D, $\|x\|_1$ is the sum of the absolute value of each of the columns in sparse vector x, wherein each sparse vector is an m*1-dimensional vector, and the predetermined dictionary D is an n*m matrix.

For each of the cells in an image, the terminal may obtain an optimum predetermined dictionary D through iterative calculation, and take the vectors in each of the cells as given observed signals y, and then calculate the sparse vector x for the vectors in each of the cells under the optimum predetermined dictionary D using the formula above. Since the adjusted vectors in each of the cells are of n*1-dimentional, and the predetermined dictionary D obtained by iterative calculation by the terminal is an n*m matrix, thus the sparse vector calculated by the above formula which corresponds to the vectors in each of the cells is of m*1 dimensional.

In step 207, a gradient magnitude and a gradient direction of each of the cells is calculated according to the sparse vectors to obtain a descriptor of each of the cells.

The terminal may calculate a transverse gradient and a longitudinal gradient of each of the pixels in each cell which is subject to the sparse signal decomposition using the gradient operator.

That is, for each element of the sparse vector corresponding to each of the cells, a transverse gradient and a longitudinal gradient are calculated using the gradient operator.

For example, the common gradient operators are shown in table1 below:

Table 1

| Mask type | Central vector | Non-central vector | Attention correction vector | diagonal | Sobel operator |
|---|---|---|---|---|---|
| operator | [10-1] | [1-1] | [180-8-1] | $\begin{pmatrix} 0 & 1 \\ -1 & 0 \end{pmatrix}$ $\begin{pmatrix} 1 & 0 \\ 0 & -1 \end{pmatrix}$ | $\begin{pmatrix} 1 & 0 & -1 \\ 2 & 0 & -2 \\ 1 & 0 & 1 \end{pmatrix}$ |

In the embodiment, when calculating the gradient of the pixels in each of the cells, any gradient operator in Table 1 may be selected, or other gradient operators may also be selected. The selection of gradient operator will not be specifically limited in the embodiment.

Assuming that the transverse gradient of the element in sparse vector is H(x, y), and the longitudinal gradient is V(x, y), then the gradient direction and gradient magnitude corresponding to the element may be calculated by formula (1) and (2) as below:

$$\theta(x,y) = \tan^{-1}[V(x,y)/H(x,y)] \qquad (1)$$

$$m(x,y) = [H(x,y)^2 + V(x,y)^2]^{1/2} \qquad (2)$$

wherein, $\theta(x,y)$ is the gradient direction of element (x, y) in sparse vector, and m(x, y) is the gradient magnitude of element (x, y).

The gradient direction $\theta(x,y)$ is ranged from -90 degrees to 90 degrees. The gradient direction $\theta(x,y)$ is partitioned evenly into z portions, and all the elements in the sparse vector corresponding to each of the cells are counted based on weight m(x, y) in respective partitioned portion to obtain a z-dimensional vector for each of the cells finally, that is, a descriptor corresponding to each of the cells is obtained.

For example, the gradient direction $\theta(x,y)$ is partitioned evenly into 9 portions, wherein the angle corresponding to each of the portions is 20 degrees; and all the elements in each of the cells are counted based on weight m(x, y) in respective 20-degrees to finally obtain a 9-dimentional vector for each of the cells.

The number of portions wherein the gradient direction is partitioned is not specifically limited in the present embodiment.

In step 208, the respective descriptors in each of the blocks are counted to obtain the HOG feature of each of the blocks.

The terminal performs statistics on the descriptors obtained from respective cells contained in each of the blocks to obtain the HOG feature of each of the blocks.

When performing statistics on all the descriptors obtained from respective cells, the terminal may cascade the descriptors corresponding to respective cells, so that the HOG feature of each of the blocks may be a vector, wherein the dimension of the vector is k times of the dimension of the descriptor corresponding to the cells contained in the block.

For example, the descriptor in respective cells is a 9-dimensional vector, and each of the blocks includes 4 cells. The 9-dimensional descriptors in 4 cells are cascaded to form a 36-dimensional vector, which is served as the HOG feature of the corresponding block.

In step 209, the HOG feature of respective blocks are counted to obtain the HOG feature of the image.

The terminal counts the HOG feature of respective blocks to obtain the HOG feature of the image. The HOG feature of respective blocks in the image are cascaded to form a matrix to obtain the HOG feature of the image, wherein each column of the matrix represents the HOG feature of one block.

For example, an image includes K blocks, and the HOG feature of each of the blocks is $K_i$, then $K_i$ HOG feature are cascaded to form a matrix 250, wherein $K_1$ is placed at the first column 26 of the cascaded matrix, and $K_2$ is placed at the second column 27 of the cascaded matrix, and so on, as shown in FIG. 2E.

To sum up, by obtaining the sample images including a plurality of categories of image sets; using a formula to iterate to obtain an optimum dictionary, which is served as the predetermined dictionary D; partitioning the image into a plurality of blocks, wherein each of the blocks includes a plurality of cells; adjusting the pixels in each of the cells to an n*1-dimensional vector; performing a sparse signal decomposition on each of the cells using a formula to obtain the corresponding sparse vector; calculating a gradient magnitude and a gradient direction for each of the cells according to the sparse vector, to obtain a descriptor of each of the cells; and performing statistics on respective descriptors in each of the blocks to obtain the HOG feature of the image, the method for feature extraction provided in the present embodiment of the disclosure may solve the following fact that the detection rate and accuracy are relatively low in pattern recognition due to the fact that the process for extracting the HOG feature is directly calculated with respect to the spatial domain of the image. The method may achieve the intended effect of improving the detection rate and accuracy in pattern recognition by extracting the HOG feature of the image in the frequency domain.

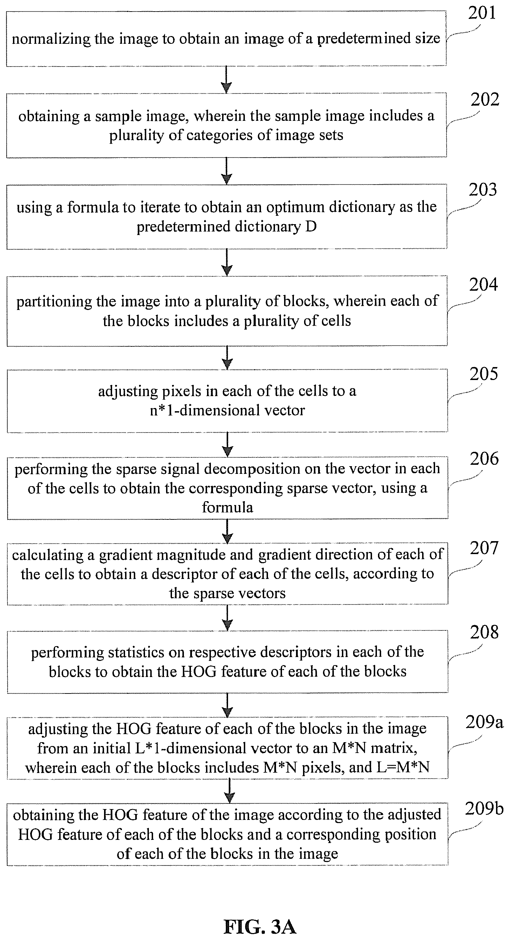

Based on the exemplary embodiment illustrated in Fig. 2A, during the process for performing statistics on the HOG feature of respective blocks in the image to obtain the HOG feature of the image, it may be arranged according to the corresponding position in the image. Step 209 may be substituted for step 209a and 209b, as shown in FIG. 3A.

In step 209a, the HOG feature of each of the blocks in the image are adjusted to an M*N matrix from an initial L*1-dimensional vector, wherein each of the blocks includes M*N pixels, and L=M*N.

The HOG feature of each of the blocks are an L*1-dimensional vector formed by cascading the descriptors corresponding to each of the cells. The terminal adjusts the L*1-dimensional vector to an M*N matrix, that is, the L*1-dimensional vector in each of the blocks is adjusted to a corresponding matrix according to the included cells, wherein each column of the corresponding matrix is a descriptor of a cell; and then the descriptors of each of the cell are adjusted according to the corresponding pixels, wherein each column of the adjusted matrix is the HOG feature corresponding to the pixels of the corresponding column in the corresponding block.

In step 209b, the HOG feature of the image is obtained according to the adjusted HOG feature of each of the blocks and the corresponding position of each of the blocks in the image.

According to the adjusted HOG feature of each of the blocks and the corresponding position of each of the blocks in the image, the HOG feature of the positions of the corresponding pixels in the image are obtained.

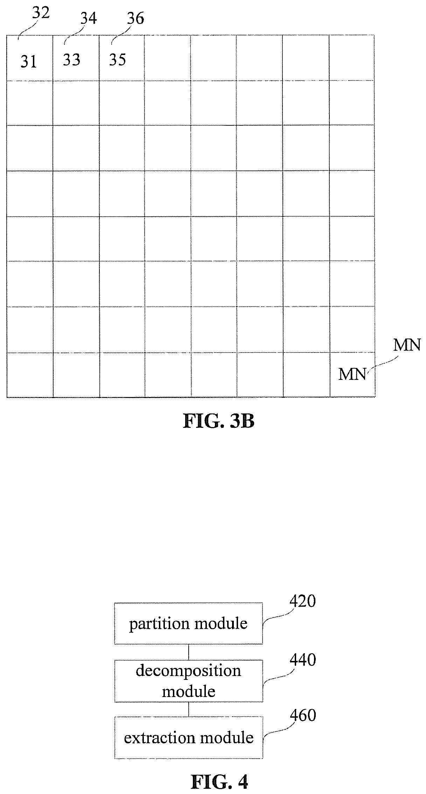

For example, an image includes K blocks, and HOG feature of respective blocks are $K_i$, so that the $K_i$ HOG feature are adjusted to an M*N matrix. The matrix 31 adjusted by $K_1$ is placed at the corresponding position of the first block 32 in the image, and the matrix 33 adjusted by $K_2$ is placed at the corresponding position of the second block 34 in the image, and so on, finally the matrix MN is placed at the corresponding position of the last block MN in the image, as shown in FIG. 3B.

To sum up, by adjusting the HOG feature of each of the blocks in the image from an initial L*1-dimensional vector to an M*N matrix, wherein each of the blocks includes M*N pixels, and L=M*N; obtaining the HOG feature of the image according to the adjusted HOG feature of each of the blocks and the corresponding position of each of the blocks in the image; and thus enabling the extracted HOG feature of the image to correspond to the corresponding position of each of the blocks in the image, the method for feature extraction provided in the present embodiment may highlight the feature of each of the blocks in the image.

The embodiments described below are embodiments for the device of the disclosure, which may be used to implement the method as shown in the embodiments of the disclosure. For the details undisclosed in the embodiments for the device, please refer to the embodiments for the method of the disclosure.

FIG. 4 is a block diagram illustrating a device for feature extraction according to an exemplary embodiment. As shown in FIG. 4, the device for feature extraction may include, but not limited to:

a partition module 420, configured to partition an image into a plurality of blocks, wherein each of the blocks includes a plurality of cells;

a decomposition module 440, configured to perform the sparse signal decomposition on each of the cells using a predetermined dictionary D, to obtain a sparse vector corresponding to each of the cells respectively;

wherein the predetermined dictionary D is a dictionary calculated by applying an iterative algorithm to the sample images, and the sparse signal decomposition refers to converting a given observed signal into a sparse vector according to the predetermined dictionary D, wherein the value of a plurality of elements in the sparse signal is zero.

In the embodiment, the pixels in each of the cells are served as the given observed signals, thus obtaining the respective sparse signal of each of the cells.

an extraction module 460, configured to extract a Histogram of Oriented Gradient (HOG) feature of the image according to the sparse vectors.

The HOG feature of the image is extracted according to the sparse vector processed with the sparse signal decomposition.

To sum up, by partitioning an image into a plurality of blocks, wherein each of the blocks includes a plurality of cells; performing a sparse signal decomposition on each of the cells using a predetermined dictionary D to obtain a sparse vector corresponding to each of the cells respectively, wherein the predetermined dictionary D is a dictionary calculated by applying an iterative algorithm to a sample image; and extracting a Histogram of Oriented Gradient (HOG) feature of the image according to the sparse vectors, the device for feature extraction provided in the embodiment of the disclosure may solve the following fact that the detection rate and accuracy are relatively low in pattern recognition due to the fact that the process for extracting the HOG feature is directly calculated with respect to the spatial domain of the image. The device may achieve the intended effect of improving the detection rate and accuracy in pattern recognition by extracting the HOG feature of the image in the frequency domain.

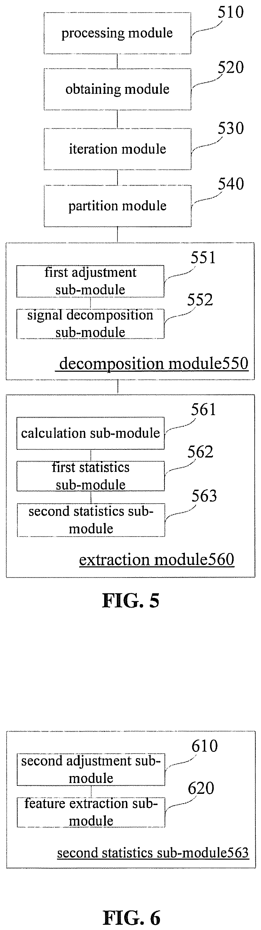

FIG. 5 is a block diagram showing a device for feature extraction according to another exemplary embodiment. As shown in FIG. 5, the device for feature extraction may include, but not limited to:

an processing module 510, configured to performing normalization processing on the image to obtain an image of a predetermined size.

Pattern recognition generally involves the feature extraction for a plurality of images.

Before performing the feature extraction to an image, the processing module 510 may perform normalization processing to transform the images of different sizes into those of a predetermined size in order to perform a unified processing on them.

an obtaining module 520, configured to obtain a sample image, wherein the sample image includes a plurality of categories of image sets.

Through sample image library, the obtaining module 520 may obtain the sample images including a plurality of categories of the image sets, such as face recognition, body recognition or vehicle recognition and the like.

an iteration module 530, configured to use the following formula to iterate to obtain an optimum dictionary as the predetermined dictionary D:

$$\min(R,D)\ \left\|Y - DR\right\|_F^2 \ \text{ subject to }\ \forall i, \left\|m_i\right\|_0 \le T_0$$

wherein, R= $[r_1, r_2,..., r_c]$ denotes a sparse coefficient matrix of C sample images, Y denotes all categories of the sample images, $\|\bullet\|_0$ denotes calculating a number of non-zero elements in a vector, $T_0$ denotes a predefined sparse upper limit, and $\|\bullet\|_F$ denotes calculating a quadratic sum of each element of a vector, and then squaring the quadratic sum.

K-SVD algorithm may implement the dictionary learning in sample images through iterative process, which uses sparse representation coefficients to update the atoms in the dictionary. Through continuous iteration, a set of atoms in the dictionary, which may reflect image feature, are obtained finally, namely predetermined dictionary D, wherein the atoms is referred to the elements in the dictionary. That is, the final predetermined dictionary D is an optimum dictionary obtained by sample images learning.

The iterative process of K-SVD algorithms is as follows: assuming that there are X categories sample images, Ni sample images are provided for the i-th category. All the sample images of i-th category are represented by the matrix $Y_i = [y_{i1},...,y_{iN_i}]$ and the sample images of all categories are represented by $Y_i = [Y_1,...,Y_x]$. Using the formulas above to learn in the sample images, an optimum predetermined dictionary D will be obtained finally.

The device may further include a partition module 540, configured to partition an image into a plurality of blocks, wherein each of the blocks includes a plurality of cells.

In a particular example, the partition of the normalized image by the partition module 540 may include: firstly partitioning the image into a plurality of blocks, then partitioning each of the blocks into a plurality of cells.

In a particular example, the partition of the normalized image by the partition module 540 may include: firstly partitioning the image into a plurality of cells, and then combining adjacent cells into a block, wherein each of the blocks include a plurality of cells. For example, a block may compose of four adjacent pairwise cells which is arranged in a shape of Chinese feature "田".

In the present exemplary embodiment, during the process of image partition by the partition module 540, the partitioning into blocks may be performed before the partitioning into cells, and vice versa. The implementation order is without any specific limit.

In the present exemplary embodiment, there may be or may not be an overlapping area between the partitioned blocks of the image. The partition module 540 may not specifically limit to it.

The device may further include a decomposition module 550, configured to perform the sparse signal decomposition on each of the cells using the predetermined dictionary D to get a sparse vector corresponding to each of the cell respectively.

The predetermined dictionary D is a dictionary calculated by applying an iterative algorithm to the sample images, and the sparse signal decomposition refers to converting a given observed signal into a sparse vector according to the predetermined dictionary D, wherein the value of a plurality of elements in the sparse signal is zero.

In the present exemplary embodiment, the pixels in each of the cells are served as the given observed signals, and converted into the corresponding sparse vector according to the predetermined dictionary D, thus obtaining the respective sparse signal of each of the cells.

In the present exemplary embodiment, the decomposition module 550 may include the following sub-modules:

a first adjustment sub-module 551, configured to adjust pixels in each of the cells to an n*1-dimensional vector.

After the partition of the image, the pixels in each of the cells may be considered as a matrix, and the matrix corresponding to the pixels in each of the cells may be adjusted to an n*1-dimensional vector.

The decomposition module 550 may further include a signal decomposition sub-module 552, configured to perform the sparse signal decomposition on the vectors in each of the cells according to the predetermined dictionary D to obtain the corresponding sparse vector, using the following formula:

$$\min(x) \; \|x\|_1 \; \text{subject to} \; y = Dx$$

wherein, y denotes the vectors in each of the cells, x denotes the sparse vector obtained by sparse processing y under the predetermined dictionary D, $\|x\|_1$ denotes the sum of the absolute value of each column of the sparse vector x, wherein each of the sparse vectors is an m*1-dimensional vector, and the predetermined dictionary D is an n*m matrix.

For each of the cells in the image, an optimum predetermined dictionary D is calculated by the iteration module 530, and the signal decomposition sub-module 552 serves the vectors in each of the cells as the given observed signals y, then the sparse vector x for the vectors in each of the cells is calculated under a predefined over-complete dictionary D using the formula above. Since the adjusted vectors in each of the cells are of n*1-dimention, and the predetermined dictionary D calculated by the iteration module 530 is an n*m matrix, thus the sparse vector corresponding to the vectors in each of the cells calculated using formula above is of m*1 dimension.

The device may further include an extraction module 560, configured to extract a Histogram of Oriented Gradient (HOG) feature of the image according to the sparse vectors.

The HOG feature of the image is extracted according to the sparse vectors subject to sparse signal decomposition.

In the present exemplary embodiment, the extraction module 560 may further include the following sub-modules:

a calculation sub-module 561, configured to calculate a gradient magnitude and a gradient direction of each of the cells according to the sparse vectors, to obtain the descriptors of each of the cells.

The calculation sub-module 561 may calculate a transverse gradient and a longitudinal gradient of each of the pixels in each cell which is subject to the sparse signal decomposition using the gradient operator. The embodiment will not specifically limit to the selection of the gradient operator.

That is, for each element of the sparse vector corresponding to each of the cells, a transverse gradient and a longitudinal gradient are calculated using the gradient operator

Assuming that the transverse gradient of the element in sparse vector is H(x, y), and the longitudinal gradient is V(x, y), then the gradient direction and gradient magnitude corresponding to the element may be calculated by formula (1) and (2) as below:

$$\theta(x,y) = \tan^{-1}[V(x,y)/H(x,y)] \qquad (1)$$

$$m(x,y) = [H(x,y)^2 + V(x,y)^2]^{1/2} \qquad (2)$$

wherein, $\theta(x,y)$ is the gradient direction of element (x, y) in sparse vector, and m(x, y) is the gradient magnitude of element (x, y).

The gradient direction $\theta(x,y)$ is ranged from -90 degrees to 90 degrees. The gradient direction $\theta(x,y)$ is partitioned evenly into z portions, and all the elements in the sparse vector corresponding to each of the cells are counted based on weight m(x, y) in respective partitioned portion to obtain a z-dimensional vector for each of the cells finally, that is, a descriptor corresponding to each of the cells is obtained.

The extraction module 560 may further include a first statistics sub-module 562, configured to perform statistics on a respective descriptor in each of the blocks to obtain the HOG feature of each of the blocks.

The first statistics sub-module 562 may perform statistics on the descriptors of the respective cells included in each of the blocks to obtain the HOG feature of each of the blocks.

While performing statistics on the descriptors of the respective cells, the first statistics sub-module may cascade the descriptors corresponding to the respective cells, so that the HOG feature of each of the block is a vector, whose dimension is k times of the dimension of the descriptor corresponding to the cells included in the block.

The extraction module 560 may further include a second statistics sub-module 563, configured to perform statistics on the HOG feature of respective blocks in the image to obtain the HOG feature of the image.

The second statistics sub-module 563 may perform statistics on the HOG feature of the respective blocks in the image to obtain the HOG feature of the image.

In a particular example, the second statistics sub-module 563 may be configured to cascade the HOG feature of each of the blocks to be a matrix to obtain the HOG feature of the image, wherein each column of the matrix is the HOG feature of one of the blocks.

To sum up, by obtaining the sample images including a plurality of categories of image sets; using a formula iterate to obtain an optimum dictionary, which is served as the predetermined dictionary D; partitioning the image into a plurality of blocks, wherein each of the blocks includes a plurality of cells; adjusting the pixels in each of the cells to an $n*1$-dimensional vector; performing a sparse signal decomposition on each of the cells using a formula to obtain the corresponding sparse vector; calculating a gradient magnitude and a gradient direction for each of the cells according to the sparse vector, to obtain a descriptor of each of the cells; and performing statistics on respective descriptors in each of the blocks to obtain the HOG feature of the image, the device for feature extraction provided in the embodiment of the disclosure may solve the following fact that the detection rate and accuracy are relatively low in pattern recognition due to the fact that the process for extracting the HOG feature is directly calculated with respect to the spatial domain of the image. The device may achieve the intended effect of improving the detection rate and accuracy in pattern recognition by extracting the HOG feature of the image in the frequency domain.

Based on the alternative embodiment illustrated in Fig. 5, the second statistics sub-module 563 may include the following sub-modules, as shown in Fig. 6:

a second adjustment sub-module 610, configured to adjust the HOG feature of each of the blocks in the image from an initial $L*1$-dimensional vector to an $M*N$ matrix, wherein each of the blocks includes $M*N$ pixels, and $L=M*N$.

The HOG feature of each of the blocks are an $L*1$-dimensional vector formed by cascading the descriptors corresponding to each of the cells. The second adjustment sub-module 610 may adjust the $L*1$-dimensional vector to an $M*N$ matrix, that is, the $L*1$-dimensional vector in each of the blocks is adjusted to a corresponding matrix according to the included cells, wherein each column of the corresponding matrix is a descriptor of a cell; and then the descriptors of each of the cell are adjusted according to the corresponding pixels, wherein each column of the adjusted matrix is the HOG feature corresponding to the pixels of the corresponding column in the corresponding block.

a feature extraction sub-module 620, configured to obtain the HOG feature of the image according to the adjusted HOG feature of each of the blocks and the corresponding position of each of the blocks in the image.

The feature extraction sub-module 620 may obtain the HOG feature of the positions of the corresponding pixels in the image according to the adjusted HOG feature of each of the blocks and the corresponding position of each of the blocks in the image.

To sum up, by adjusting the HOG feature of each of the blocks in the image from an initial $L*1$-dimensional vector to an $M*N$ matrix, wherein each of the blocks includes $M*N$ pixels, and $L=M*N$; obtaining the HOG feature of the image according to the adjusted HOG feature of each of the blocks and the corresponding position of each of the blocks in the image; and thus enabling the extracted HOG feature of the image to correspond to the corresponding position of each of the blocks in the image, the device for feature extraction provided in the embodiment may highlight the feature of each of the blocks in the image.

With respect to the device in the above embodiments, the specific manners that the respective modules perform operations have been described in detail in the embodiments regarding the relevant methods, and will not be elaborated herein.

In an exemplary embodiment of the disclosure, a device for feature extraction is provided, which may implement the method for feature extraction in the disclosure, the device including: a processor; and a memory, used to store the instructions executable by the processor; wherein the processor is configured to:

partition an image into a plurality of blocks, wherein each of the blocks includes a plurality of cells; perform a sparse signal decomposition on each of the cells using a predetermined dictionary D to obtain a sparse vector corresponding to each of the cells respectively, wherein the predetermined dictionary D is a dictionary calculated by applying an iterative algorithm to a sample image; extract a Histogram of Oriented Gradient (HOG) feature of the image according to the sparse vectors

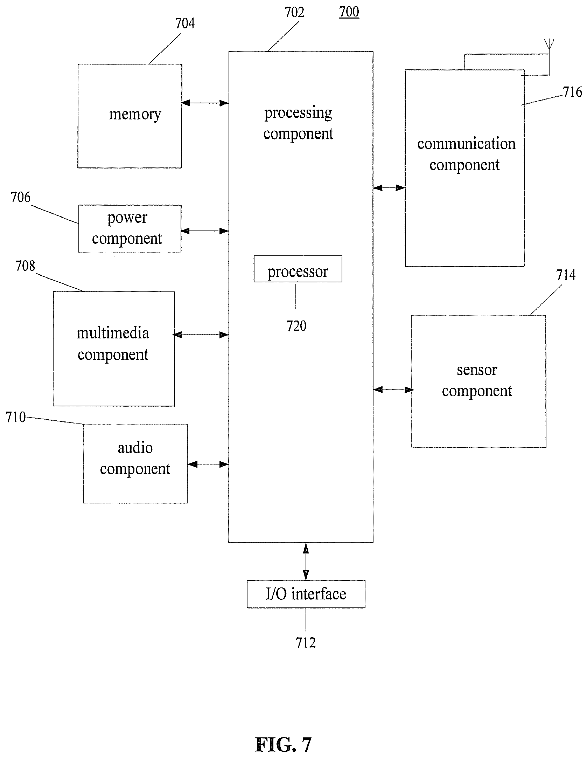

FIG. 7 is a block diagram of a device 700 for feature extraction according to an exemplary embodiment. For example, the device 700 may be a mobile phone, a computer, a digital broadcast terminal, a messaging device, a gaming console, a tablet, a medical device, exercise equipment, a personal digital assistant, and the like.

Referring to FIG. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 718 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power for the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have optical focusing and zooming capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, the peripheral interface modules being, for example, a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components (e.g., the display and the keypad, of the device 700), a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of a nearby object without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In an exemplary embodiment, the communication component 716 receives a broadcast signal or broadcast associated information from an external broadcast management system via a broadcast channel. In an exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for feature retrieving.

In exemplary embodiments, there is also provided a non-transitory computer-readable storage medium including instructions, such as included in the memory 704, executable by the processor 718 in the device 700, for performing the above-described methods for feature retrieving. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the invention being indicated by the following claims.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method for feature extraction, **characterized in that** it comprises:

   partitioning (102) an image into a plurality of blocks, wherein each of the blocks includes a plurality of cells;
   performing (104) a sparse signal decomposition on each of the cells using a predetermined dictionary D, to obtain a sparse vector corresponding to each of the cells respectively, wherein the predetermined dictionary D is a dictionary calculated by applying an iterative algorithm to a sample image; and
   extracting (106) a Histogram of Oriented Gradient (HOG) feature of the image according to the sparse vectors.

2. The method of claim 1, further comprising:

   obtaining (202) the sample image, wherein the sample image includes a plurality of categories of image sets; and
   iterating (203) to obtain an optimum dictionary as the predetermined dictionary D, using the following formula:

$$\min(R, D) \ \left\| Y - DR \right\|_F^2 \ \text{ subject to } \ \forall i, \left\| m_i \right\|_0 \leq T_0$$

   wherein, $R = [r_1, r_2, ..., r_c]$ denotes a sparse coefficient matrix of C sample images, Y denotes all categories of the sample images, $\|\cdot\|_0$ denotes calculating a number of non-zero elements in a vector, $T_0$ denotes a predefined sparse upper limit, and $\|\cdot\|_F$ denotes calculating a quadratic sum of each element of a vector, and then squaring the quadratic sum.

3. The method of claim 1 or 2, wherein the performing (104) the sparse signal decomposition on each of the cells using a predetermined dictionary D, to obtain the sparse vector corresponding to each of the cells respectively comprises:

   adjusting (205) pixels in each of the cells to an n*1-dimensional vector; and
   performing (206), under the predetermined dictionary D, the sparse signal decomposition on the vector in each of the cells, to obtain the corresponding sparse vector, using the following formula:

$$\min(x) \ \left\| x \right\|_1 \ \text{ subject to } \ y = Dx$$

   wherein, y denotes the vector in each of the cells, x denotes a sparse vector obtained by sparse processing y under the predetermined dictionary D, $\|x\|_1$ denotes a sum of absolute value of each column of the sparse vector x, wherein each of the sparse vectors is an m*1-dimensional vector, and the predetermined dictionary D is an n*m matrix.

4. The method of any one of claims 1 to 3, wherein the extracting (106) the Histogram of Oriented Gradient (HOG) feature of the image according to the sparse vectors comprises:

calculating (207), according to the sparse vectors, a gradient magnitude and gradient direction of each of the cells, to obtain a descriptor of each of the cells;

performing (208) statistics on respective descriptors in each of the blocks to obtain the HOG feature of each of the blocks; and

performing (209) statistics on the HOG feature of each of the blocks in the image to obtain the HOG feature of the image.

5. The method of claim 4, wherein the performing (209) statistics on the HOG feature of each of the blocks in the image to obtain the HOG feature of the image includes:

cascading the HOG feature of each of the blocks in the image into a matrix, to obtain the HOG feature of the image, wherein each column of the matrix is a HOG feature of one of the blocks.

6. The method of claim 4, wherein the performing (209) statistics on the HOG feature of each of the blocks in the image to obtain the HOG feature of the image includes:

adjusting (209a) the HOG feature of each of the blocks in the image from an initial L*1-dimensional vector to an M*N matrix, wherein each of the blocks includes M*N pixels, and L=M*N; and

obtaining (209b) the HOG feature of the image according to the adjusted HOG feature of each of the blocks and a corresponding position of each of the blocks in the image.

7. The method of any one of claims 1 to 6, further comprising:

normalizing (201) the image to obtain an image of a predetermined size.

8. A device for feature extraction, **characterized in** comprising:

a partition module (420), configured to partition an image into a plurality of blocks, wherein each of the blocks includes a plurality of cells;

a decomposition module (440), configured to perform a sparse signal decomposition on each of the cells using a predetermined dictionary D, to obtain a sparse vector corresponding to each of the cells respectively, wherein the predetermined dictionary D is a dictionary calculated by applying an iterative algorithm to a sample image; and

an extraction module (460), configured to extract a Histogram of Oriented Gradient (HOG) feature of the image according to the sparse vectors.

9. The device of claim 8, further comprising:

an obtaining module (520), configured to obtain a sample image, wherein the sample image includes a plurality of categories of image sets; and

an iteration module (530), configured to iterate to obtain an optimum dictionary as the predetermined dictionary D, using the following formula:

$$\min(R, D) \ \left\| Y - DR \right\|_F^2 \ \text{ subject to } \ \forall i, \left\| m_i \right\|_0 \le T_0$$

wherein, $R = [r_1, r_2, ..., r_c]$ denotes a sparse coefficient matrix of C sample images, Y denotes all categories of the sample images, $\|\cdot\|_0$ denotes calculating a number of non-zero elements in a vector, $T_0$ denotes a predefined sparse upper limit, and $\|\cdot\|_F$ denotes calculating a quadratic sum of each element of a vector, and then squaring the quadratic sum.

10. The device of claim 8 or 9, wherein the decomposition module (440) comprises:

a first adjustment sub-module (551), configured to adjust pixels in each of the cells to an n*1-dimensional vector; and

a signal decomposition sub-module (552), configured to perform, under the predetermined dictionary D, the sparse signal decomposition on the vector in each of the cells, to obtain the corresponding sparse vector, using the following formula:

$$\min(x) \ \|x\|_1 \ \ \text{subject to} \ \ y = Dx$$

wherein, y denotes the vector in each of the cells, x denotes a sparse vector obtained by sparse processing y under the predetermined dictionary D, $\|x\|_1$ denotes a sum of absolute value of each column of the sparse vector x, wherein each of the sparse vectors is an m*1-dimensional vector, and the predetermined dictionary D is an n*m matrix.

**11.** The device of any one of claims 8 to 10, wherein the extraction module (460) comprises:

a calculation sub-module (561), configured to calculate, according to the sparse vectors, a respective gradient magnitude and gradient direction of each of the cells, to obtain a descriptor of each of the cells;
a first statistics sub-module (562), configured to perform statistics on a respective descriptors in each of the blocks to obtain the HOG feature of each of the blocks; and
a second statistics sub-module (563), configured to perform statistics on the HOG feature of each of the blocks in the image to obtain the HOG feature of the image.

**12.** The device of claim 11, wherein the second statistics sub-module is configured to cascade the HOG feature of each of the blocks in the image into a matrix, to obtain the HOG feature of the image, wherein each column of the matrix is a HOG feature of one of the blocks.

**13.** The device of claim 11, wherein the second statistics sub-module (563) comprises:

a second adjustment sub-module (610), configured to adjust the HOG feature of each of the blocks in the image from an initial L*1-dimensional vector to an M*N matrix, wherein each of the blocks includes M*N pixels, and L=M*N; and
a feature extraction sub-module (620), configured to obtain the HOG feature of the image according to the adjusted HOG feature of each of the blocks and a corresponding position of each of the blocks in the image.

**14.** The device of any one of claims 8 to 13, further comprising:

a processing module, configured to normalize the image to obtain an image of a predetermined size.

**15.** A recording medium readable by a computer and having recorded thereon a computer program including instructions for executing the steps of a method for feature extraction according to any one of claims 1 to 7.

**16.** A computer program including instructions for executing the steps of a method for feature extraction according to any one of claims 1 to 7 when said program is executed by a computer.

partitioning an image into a plurality of blocks, wherein each of the blocks includes a plurality of cells                                    102

performing a sparse signal decomposition to each of the cells to obtain a sparse vector corresponding to each of the cells respectively                                    104

extracting the HOG features of the image according to the sparse vectors                                    106

## FIG. 1

| | |
|---|---|
| normalizing the image to obtain an image of a predetermined size | 201 |
| obtaining a sample image, wherein the sample image includes a plurality of categories of image sets | 202 |
| using a formula to iterate to obtain an optimum dictionary as the predetermined dictionary D | 203 |
| partitioning the image into a plurality of blocks, wherein each of the blocks includes a plurality of cells | 204 |
| adjusting pixels in each of the cells to a n*1-dimensional vector | 205 |
| performing the sparse signal decomposition on the vector in each of the cells, to obtain the corresponding sparse vector, using the following formula | 206 |
| calculating, according to the sparse vectors, a gradient magnitude and gradient direction of each of the cells, to obtain a descriptor of each of the cells | 207 |
| performing statistics on respective descriptors in each of the blocks to obtain the HOG feature of each of the blocks | 208 |
| performing statistics on the HOG feature of each of the blocks in the image to obtain the HOG feature of the image | 209 |

**FIG. 2A**

21   21   21   21

22
20

**FIG. 2B**

23 23 23 23 23 23        23 23

24
20

**FIG. 2C**

**FIG. 2D**

**FIG. 2E**

normalizing the image to obtain an image of a predetermined size — 201

↓

obtaining a sample image, wherein the sample image includes a plurality of categories of image sets — 202

↓

using a formula to iterate to obtain an optimum dictionary as the predetermined dictionary D — 203

↓

partitioning the image into a plurality of blocks, wherein each of the blocks includes a plurality of cells — 204

↓

adjusting pixels in each of the cells to a n*1-dimensional vector — 205

↓

performing the sparse signal decomposition on the vector in each of the cells to obtain the corresponding sparse vector, using a formula — 206

↓

calculating a gradient magnitude and gradient direction of each of the cells to obtain a descriptor of each of the cells, according to the sparse vectors — 207

↓

performing statistics on respective descriptors in each of the blocks to obtain the HOG feature of each of the blocks — 208

↓

adjusting the HOG feature of each of the blocks in the image from an initial L*1-dimensional vector to an M*N matrix, wherein each of the blocks includes M*N pixels, and L=M*N — 209a

↓

obtaining the HOG feature of the image according to the adjusted HOG feature of each of the blocks and a corresponding position of each of the blocks in the image — 209b

**FIG. 3A**

| 31 | 33 | 35 | | | | | |
|----|----|----|--|--|--|--|--|
| | | | | | | | |
| | | | | | | | |
| | | | | | | | |
| | | | | | | | |
| | | | | | | | |
| | | | | | | | |
| | | | | | | MN |

32  34  36

MN

**FIG. 3B**

partition module — 420

decomposition module — 440

extraction module — 460

**FIG. 4**

processing module ⌐510

obtaining module ⌐520

iteration module ⌐530

partition module ⌐540

first adjustment sub-module ⌐551

signal decomposition sub-module ⌐552

decomposition module550

calculation sub-module ⌐561

first statistics sub-module ⌐562

second statistics sub-module ⌐563

extraction module560

**FIG. 5**

second adjustment sub-module ⌐610

feature extraction sub-module ⌐620

second statistics sub-module563

**FIG. 6**

**FIG. 7**

Europäisches Patentamt
European Patent Office
Office européen des brevets

# EUROPEAN SEARCH REPORT

Application Number

EP 16 19 9669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BARDEH NARGES GHAEDI ET AL: "New approach for human detection in images using histograms of oriented gradients", 2013 21ST IRANIAN CONFERENCE ON ELECTRICAL ENGINEERING (ICEE), IEEE, 14 May 2013 (2013-05-14), pages 1-4, XP032483163, DOI: 10.1109/IRANIANCEE.2013.6599619 [retrieved on 2013-09-13] * abstract, 2.1, Figure 1 * | 1-16 | INV. G06K9/46 G06K9/62 |
| A | DALAL N ET AL: "Histograms of oriented gradients for human detection", PROCEEDINGS / 2005 IEEE COMPUTER SOCIETY CONFERENCE ON COMPUTER VISION AND PATTERN RECOGNITION, CVPR 2005 : [20 - 25 JUNE 2005, SAN DIEGO, CA], IEEE, PISCATAWAY, NJ, USA, 25 June 2005 (2005-06-25), pages 886-893vol.1, XP031330347, ISBN: 978-0-7695-2372-9 | 1 | |
| A | CN 104 850 852 A (BEIJING XIAOMI TECHNOLOGY CO) 19 August 2015 (2015-08-19) * the whole document * | 1-16 | TECHNICAL FIELDS SEARCHED (IPC) G06K |

The present search report has been drawn up for all claims

| Place of search | Date of completion of the search | Examiner |
|---|---|---|
| The Hague | 31 March 2017 | Versluis, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 19 9669

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2017

| Patent document cited in search report | Publication date | Patent family member(s) | Publication date |
|---|---|---|---|
| CN 104850852 A | 19-08-2015 | NONE | |

EPO FORM P0459

For more details about this annex : see Official Journal of the European Patent Office, No. 12/82